(19) **Europäisches Patentamt / European Patent Office / Office européen des brevets**

(11) **EP 3 658 869 B1**

(12) # FASCICULE DE BREVET EUROPEEN

(45) Date de publication et mention de la délivrance du brevet:
**26.05.2021 Bulletin 2021/21**

(21) Numéro de dépôt: **18740871.1**

(22) Date de dépôt: **24.07.2018**

(51) Int Cl.:
**G01H 9/00** *(2006.01)*     **G01V 1/18** *(2006.01)*
**G02B 6/02** *(2006.01)*

(86) Numéro de dépôt international:
**PCT/EP2018/069999**

(87) Numéro de publication internationale:
**WO 2019/020604 (31.01.2019 Gazette 2019/05)**

(54) **DISPOSITIF DE COMPENSATION EN TEMPERATURE ET TRANSDUCTEUR ELECTRO-OPTIQUE METTANT EN OEUVRE UN TEL DISPOSITIF**

TEMPERATURKOMPENSATIONSVORRICHTUNG UND ELEKTROOPTISCHER WANDLER MIT EINER SOLCHEN VORRICHTUNG

TEMPERATURE-COMPENSATING DEVICE AND ELECTRO-OPTIC TRANSDUCER IMPLEMENTING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2017 FR 1700797**

(43) Date de publication de la demande:
**03.06.2020 Bulletin 2020/23**

(73) Titulaire: **Thales**
**92400 Courbevoie (FR)**

(72) Inventeurs:
- **LAUNAY, François - Xavier**
  **06903 Sophia Antipolis (FR)**
- **LARDAT, Raphael**
  **06903 Sophia Antipolis (FR)**

- **ROUX, Gérard**
  **06903 Sophia Antipolis (FR)**
- **OUBAICHE, Christophe**
  **06903 Sophia Antipolis (FR)**
- **BARREAU, Romain**
  **06903 Sophia Antipolis (FR)**
- **PASTUREAUD, Thomas**
  **06903 Sophia Antipolis (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 1 063 546        EP-A2- 1 308 764**
**WO-A1-03/032043        WO-A1-2017/102767**
**US-A1- 2013 044 984**

Printed by Jouve, 75001 PARIS (FR)

**Description**

*DOMAINE DE L'INVENTION*

L'invention concerne le domaine général des dispositifs électro-optiques mettant en œuvre des actionneurs piézoélectriques.

Elle concerne plus particulièrement le domaine des transducteurs électro-optiques destinés à transmettre des informations sous forme optique par modulation de la fréquence d'un laser à fibre optique, ou laser à fibre, au moyen d'un actionneur piézoélectrique.

*CONTEXTE DE L'INVENTION ART ANTERIEUR*

Dans le domaine général des systèmes de capteurs acoustiques et en particulier dans le domaine des systèmes d'hydrophones acoustiques mis en œuvre dans les systèmes d'écoute sous-marine, un problème connu consiste en l'acheminement des signaux électriques produits par les différents capteurs vers un système de traitement centralisé qui exploite ces signaux de manière combinée. Or si le système considéré comporte un grand nombre de capteurs le nombre des signaux électriques à véhiculer est également important.

C'est pourquoi il est connu d'acheminer ces signaux sous forme optique en les multiplexant sur une unique fibre optique ou du moins sur un petit nombre de fibres.

En pratique, si les capteurs acoustiques mis en œuvre sont des transducteurs électro-acoustiques, la mise en place d'une transmission multiplexée par fibre optique consiste généralement à associer à chaque capteur un transducteur électro-optique capable de produire une onde lumineuse de longueur d'onde nominale $\lambda_0$ modulée par le signal électrique de détection produit par le capteur acoustique.

Chaque transducteur électro-optique produit ainsi une onde lumineuse modulée susceptible d'occuper une bande passante lumineuse, une plage de longueurs d'ondes, donnée autour de la longueur d'onde nominale $\lambda_0$.

Par suite la transmission des différentes ondes lumineuses multiplexées est réalisée en sommant sur une fibre optique appropriée l'ensemble des signaux lumineux produits en prenant soin, toutefois, que chaque transducteur électro-optique produise une onde lumineuse nominale $\lambda_0$ distincte des autres transducteurs et que la plage de longueurs d'ondes occupée par le signal pouvant être produit par un transducteur ne chevauche pas celle occupée par le signal pouvant être produit par un autre transducteur.

Or lorsque le nombre de capteurs formant le système considéré est vraiment important, il est parfois difficile de multiplexer l'ensemble des signaux optiques produits sur une seule fibre optique. C'est pourquoi, on est amené à minimiser la valeur des écarts séparant les longueurs d'ondes nominales des transducteurs électro-optiques les unes des autres. On optimise de la sorte le nombre de signaux pouvant être transmis par une même fibre optique.

Cependant, pour ce faire, il importe notamment que la longueur d'onde nominale $\lambda_0$ de l'onde lumineuse modulée produite par chacun des transducteurs connectés à la fibre optique soit maintenue la plus stable possible et dépende aussi peu que possible des conditions de température.

La demande de brevet français publiée sous la référence FR 3045817 décrit, à ce propos, un exemple de réalisation de transducteur électro-optique destiné à transformer le signal électrique produit par un capteur électroacoustique, un hydrophone en l'occurrence, en un signal lumineux obtenu par modulation de la longueur d'onde d'un laser à fibre, comportant une cavité laser constituée par un élément fibre optique formant un réseau de Bragg.

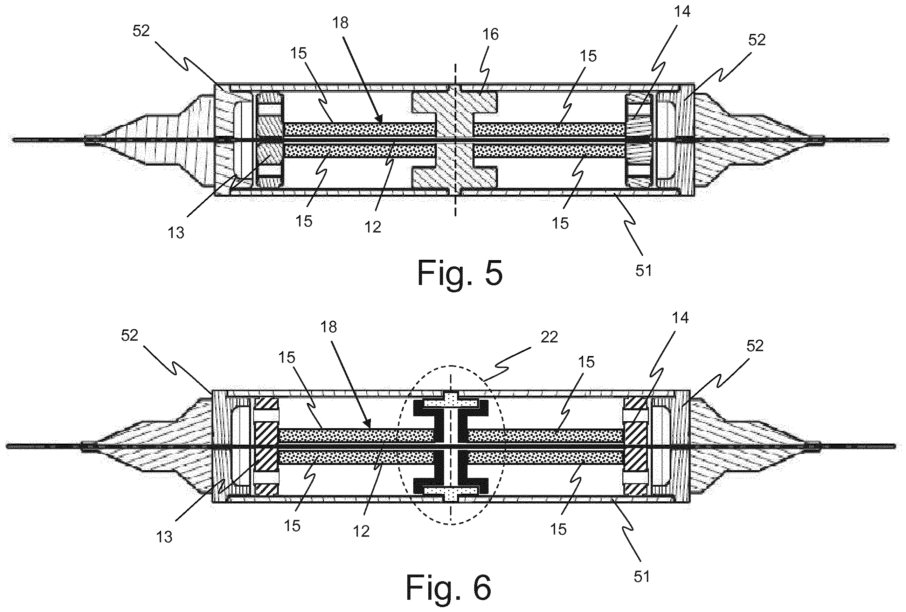

La figure 5 de la présente description présente la structure générale d'un tel transducteur, dont les détails de structure et de fonctionnement ne sont pas rappelés dans la présente description.

Le principe général de fonctionnement d'un tel transducteur électro-optique consiste en ce que la modulation de la longueur d'onde de l'onde laser produite est obtenue en faisant varier la longueur de l'élément de fibre optique 12 constituant la cavité de la source d'émission laser, ledit élément de fibre optique étant maintenu tendu (pré-tension mécanique) par des éléments de maintien 13 et 14 lorsqu'il est au repos à une température ambiante $\theta$ donnée.

La variation de longueur de l'élément de fibre optique 12 est elle-même obtenue au moyen d'un actionneur piézoélectrique 18 agencé de façon à agir sur la tension mécanique appliquée à l'élément de fibre optique 12 en fonction de la tension électrique qui lui est appliquée, tension électrique provenant, dans ce cas du capteur électro-acoustique auquel il est associé.

La variation de la tension mécanique ainsi appliquée à la fibre provoque de manière connue une variation de sa longueur L et par là-même une variation de la longueur de l'onde lumineuse produite.

Sur l'illustration de la figure 5, l'actionneur piézoélectrique 18 est constitué de quatre barreaux en matériau piézoélectrique disposés autour de l'élément de fibre optique 12 chaque barreau étant fixé par une extrémité à un des éléments de maintien 13 ou 14 et par son autre extrémité à un élément support 16 placé en position centrale. L'ensemble est placé dans un boitier constitué d'un corps cylindrique 51 fermé par deux éléments d'extrémités 52, l'élément support 16 étant solidaire du corps cylindrique 51.

Comme on peut le constater sur la figure 5, un tel transducteur présente pour principaux avantages sa simplicité de structure, sa compacité et sa facilité de mise en œuvre. En effet, en changeant de longueur sous l'action d'une tension électrique, l'actionneur piézoélectrique 18 agit directement sur la tension mécanique appliquée au segment de fibre optique 12.

Par ailleurs, avantageusement, du fait que la génération de l'onde lumineuse est réalisée au moyen d'un laser à fibre, ce type de transducteur peut être facilement raccordé en série sur une liaison par fibre optique véhiculant sous forme multiplexée les signaux lumineux produits par une pluralité de capteurs.

Ce type de transducteur présente en revanche l'inconvénient d'être sensible aux variations de la température ambiante. En effet, sous l'effet de variations de température, une fibre optique voit son indice optique varier et dans une moindre mesure sa longueur.

Par suite, lorsque la température ambiante varie, la longueur d'onde du laser à fibre varie sous l'effet conjugué de la variation de l'indice optique $\eta$ du segment de fibre 12 qui le constitue et de la longueur de ce même segment. Ces variations entrainent elles-mêmes une variation de la longueur d'onde nominale $\lambda_0$, ce qui a pour effet désavantageux d'élargir inutilement la plage de longueurs d'ondes susceptible d'être occupée par le signal produit par un transducteur.

Par conséquent en l'état actuel de la technique, quoiqu'avantageuse en termes de facilité de mise en œuvre, l'utilisation de transducteurs électro-optiques comportant une source laser constituée par laser à fibre, par exemple un transducteur du type de celui décrit dans la demande de brevet citée précédemment, a pour conséquence de limiter le nombre de transducteurs pouvant être raccordés en série à une même fibre optique sans risque de dégradation des signaux transmis du fait des variations de température.

Dans un tel contexte, si l'on veut optimiser le nombre de transducteurs électro-optiques de ce type pouvant être multiplexés en série sur une même fibre optique, il est nécessaire de trouver une solution permettant de limiter, voire de compenser totalement les effets des variations de la température ambiante sur la longueur d'onde de l'onde lumineuse produite par un tel transducteur.

Un document WO 2017/102767 A1 divulgue un transducteur électro-optique.

### PRENSENTATION DE L'INVENTION

Un but de l'invention est de proposer une solution permettant de résoudre le problème exposé précédemment, c'est-à-dire consistant à proposer un moyen pour rendre insensible aux variations de température ambiante un transducteur électro-optique comportant une source laser constituée par un laser à fibre modulée en longueur d'onde; notamment un transducteur du type décrit précédemment et dont un mode de réalisation est illustré par la figure 5.

A cet effet l'invention a pour objet, selon un premier aspect, un dispositif de compensation des variations en température de la longueur d'une fibre optique d'un transducteur électro-optique selon la revendication 1, comportant un élément support tubulaire dont l'axe de symétrie est confondu avec l'axe de ladite fibre optique et deux éléments terminaux agencés axialement par rapport à l'élément support et comportant chacun une paroi obturant l'élément support et délimitant à l'intérieur de ce dernier une cavité de longueur $\Delta L$.

Selon l'invention, au moins un des éléments terminaux, ou premier élément terminal, est configuré pour former une paroi mobile à l'intérieur de l'élément support, ledit élément présentant un corps de forme cylindrique, configuré pour pouvoir être inséré à l'intérieur du support tubulaire et pour pouvoir coulisser axialement à l'intérieur de ce dernier; ledit corps cylindrique comportant une paroi d'extrémité.

Le support tubulaire et l'élément terminal sont agencés et fixés l'un à l'autre au niveau d'une extrémité de l'élément support de telle façon que le corps de l'élément terminal soit maintenu libre de coulisser à l'intérieur du support. Le coulissement du corps du premier élément terminal entrainant le déplacement axial de sa paroi d'extrémité à l'intérieur de l'élément support (23) et une variation de la longueur $\Delta L$ de ladite cavité.

Les matériaux constituant respectivement l'élément support et l'élément terminal étant choisis pour leurs coefficients de dilatation thermique respectifs, de telle sorte que le sens de variations de la longueur $\Delta L$ de ladite cavité en fonction de la température ambiante $\theta$ soit de signe opposé au sens de variation de ladite température ambiante.

Avantageusement, le dispositif se comporte ainsi du point de vue des parois d'obturation, comme un élément à coefficient de dilatation thermique négatif.

Selon différentes dispositions pouvant être considérées séparément ou en combinaison, le dispositif de compensation en température selon l'invention peut présenter différentes caractéristique additionnelles, en particulier celles citées ci-après.

Selon une première disposition, ledit au moins un élément terminal comporte un corps cylindrique dont l'extrémité ouverte présente un bord tombé formant un rebord qui vient prendre appui sur le bord d'extrémité de l'élément support lorsque l'élément terminal est inséré dans ce dernier; ledit rebord étant fixé sur le bord d'extrémité de l'élément support.

Selon une autre disposition, le matériau constituant l'élément support est un matériau présentant un coefficient de dilatation thermique sensiblement inférieur au coefficient de dilatation thermique du matériau constituant le premier élément terminal.

Selon une autre disposition :

- l'élément support est réalisé dans un matériau à faible coefficient de dilatation thermique, en particulier du verre, du quartz ou du Zerodur, et
- le premier élément terminal est réalisé dans un matériau à coefficient de dilatation thermique plus élevé, en particulier en matériau polymère.

Selon une autre disposition, le dispositif comporte deux éléments terminaux de structures identiques, placés à chacune des extrémités de l'élément support et formant deux parois mobiles, chaque élément terminal étant inséré dans le support par une des extrémités du support; les longueurs des corps des éléments terminaux étant déterminés de telle façon que la longueur ∆L de la cavité délimitée par les parois d'extrémité ne soit jamais nulle quelle que soit la valeur de la température ambiante θ.

Selon une autre disposition, les faces externes des parois d'extrémités des éléments terminaux du dispositif sont configurées pour servir d'interfaces avec la structure mécanique pour laquelle le dispositif est destiné à assurer une compensation en température.

Selon une autre disposition, le dispositif comporte un premier élément terminal placé à une des extrémités de l'élément support et comportant une paroi d'extrémité formant une parois mobiles obturant une des extrémités de l'élément support, ledit élément terminal étant inséré dans le support par une des extrémités du support; ainsi qu'un second élément terminal formant une paroi fixe obturant l'autre extrémité de l'élément support.

La paroi d'extrémité du premier élément terminal et la paroi fixe forment le second élément terminal définissent la cavité de longueur ∆L. La longueur 1 du corps du premier élément terminal est déterminée de telle façon que la longueur ∆L de la cavité délimitée par la paroi d'extrémité de ce dernier et la cloison fixe ne soit jamais nulle quelle que soit la valeur de la température ambiante θ.

L'invention a également pour objet, selon un deuxième aspect, un transducteur électro-optique comportant une source laser constituée par un segment de fibre optique, formant la cavité laser, fixé à chacune de ses extrémités à un élément de maintien.

Selon l'invention lesdits éléments de maintien sont maintenus écartés l'un de l'autre d'une distance d par un actionneur piézoélectrique placé entre eux et prenant appui sur ces derniers.

L'actionneur piézoélectrique est configuré de telle façon que sa longueur varie en fonction de la tension électrique qui lui est appliquée, la variation de longueur induisant une variation sensiblement identique de la distance d séparant les éléments de maintien.

L'actionneur piézoélectrique comporte une pluralité de barreaux en matériau piézoélectrique, agencés longitudinalement autour du segment de fibre optique entre les éléments de maintien, ainsi qu'un dispositif de compensation en température selon l'invention, ledit dispositif étant agencé dans le prolongement des barreaux de l'actionneur piézoélectrique de façon à ce que la longueur de l'actionneur soit égale à la somme de la longueur des barreaux de matériau piézoélectrique et de l'écart ∆L qui sépare les parois d'extrémités des éléments terminaux du dispositif obturant l'élément support.

Selon différentes dispositions pouvant être considérées séparément ou en combinaison, le transducteur électro-optique selon l'invention peut présenter différentes caractéristique additionnelles, en particulier celles citées ci-après.

Selon une première disposition la longueur de l'actionneur piézoélectrique est définie de telle façon que lorsque ce dernier n'est excité par aucune tension électrique, la distance d séparant les éléments de maintien induit une pré-tension mécanique sur le segment de fibre ladite pré-tension permettant à l'actionneur de faire varier la longueur du segment de fibre, en plus et en moins autour d'une valeur de longueur nominale correspondant pour la source laser à une longueur d'onde émise $\lambda_0$.

Selon une autre disposition, le dispositif de compensation en température comportant deux éléments terminaux identiques de forme cylindrique, comportant chacun une paroi d'extrémité, l'actionneur piézoélectrique comporte une pluralité de barreaux en matériau piézoélectrique agencés de part et d'autre du dispositif de compensation en température.

Chacun des barreaux est relié mécaniquement à un des éléments de maintien par une de ses extrémités et à la paroi d'extrémité d'un des éléments terminaux dudit dispositif par son autre extrémité.

Les longueurs respectives des barreaux placés de part et d'autre dudit dispositif sont sensiblement identiques, de sorte que ce dernier occupe une position médiane dans la structure de l'actionneur.

Selon une autre disposition, le dispositif de compensation en température comportant un éléments terminal formant une paroi mobile obturant une extrémité de l'élément support et un élément terminal formant une paroi fixe obturant l'autre extrémité de l'élément support, l'actionneur piézoélectrique comporte une pluralité de barreaux en matériau piézoélectrique, agencés de façon à ce que tous les barreaux soient reliés mécaniquement à un même élément de maintien par une de leurs extrémités et à la paroi d'extrémité de l'élément terminal formant ladite paroi d'obturation mobile par son autre extrémité.

Ledit dispositif est relié par la paroi d'obturation fixe à l'autre élément de maintien, de sorte que ce dernier occupe une position extrême dans la structure de l'actionneur.

Selon une autre disposition, les longueurs respectives L du support et 1 du corps d'un élément d'extrémité constituant le dispositif de compensation en température sont définies de telle façon que compte tenu des coefficient de dilatation en température des matériaux constituant respectivement le support et l'élément d'extrémité, la variation de la longueur $\Delta L$ de la cavité interne du dispositif de compensation en température, induite par la variation de la température ambiante $\theta$, soit égale, en module, à la variation de la longueur du segment de fibre optique nécessaire pour compenser la variation de longueur d'onde longueur émise par la source laser induite par cette variation de température.

## DESCRIPTION DES FIGURES

Les caractéristiques et avantages de l'invention seront mieux appréciés grâce à la description qui suit, description qui s'appuie sur les figures annexées qui présentent:

la figure 1, une illustration schématique de la structure fonctionnelle d'un transducteur électro-optique, vu en coupe longitudinale, comportant une source laser, constituée par un laser à fibre, modulée par un actionneur piézoélectrique d'un premier type;

la figure 2, une illustration schématique de la structure du dispositif de compensation selon l'invention, vu en coupe longitudinale, dans une forme de réalisation pouvant être intégrée dans un transducteur électro-optique tel que celui illustré par la figure 1.

la figure 3, une illustration schématique du principe de fonctionnement du dispositif selon l'invention;

la figure 4, une illustration schématique de la structure du dispositif de compensation selon l'invention, vu en coupe longitudinale, dans une autre forme de réalisation pouvant être intégrée à un transducteur électro-optique, comportant également une source laser constituée par un laser à fibre, modulée par un actionneur piézoélectrique d'un second type;

la figure 5, un exemple de transducteur électro-optique, connu de l'art antérieur, auquel le dispositif selon l'invention peut s'appliquer;

la figure 6, une illustration représentant le dispositif selon l'invention mis en place dans le transducteur de la figure 5.

Il est à noter que sur les différentes figures, un même élément structurel ou fonctionnel est généralement identifié par un même repère numérique ou alphanumérique.

## DESCRIPTION DETAILLEE

Pour des raisons de clarté, la description qui suit décrit le dispositif selon l'invention au travers d'exemples particuliers de mise en œuvre de façon à mettre en évidence les caractéristiques techniques avantageuses de l'invention. Cependant l'utilisation d'exemples particuliers n'a pas pour finalité de limiter d'une quelconque façon la portée ou l'étendue de l'invention, portée et étendue qui sont seulement définies par les revendications jointes à la description.

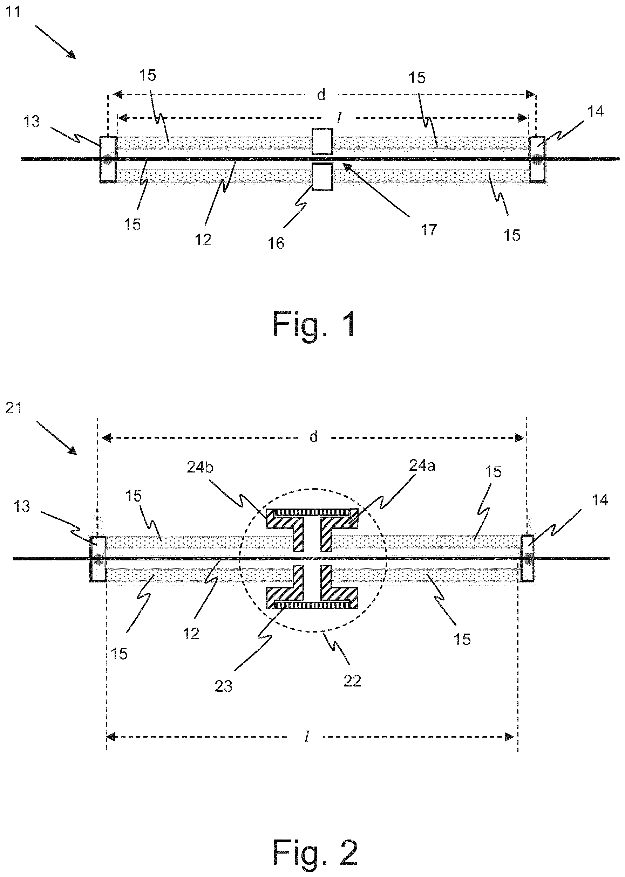

La figure 1 présente de manière schématique la structure fonctionnelle d'un transducteur électro-optique 11 pris comme exemple, auquel le dispositif selon l'invention est notamment destiné.

Un tel transducteur 11 comporte principalement une source d'émission laser constituée par un laser à fibre et des moyens de modulation formés par un actionneur piézoélectrique configuré pour induire une variation de la longueur d'onde émise par la source laser lorsqu'il est excité par une tension électrique.

Le laser à fibre comporte un segment de fibre optique 12 formant une cavité résonante, une fibre à réseau de Bragg par exemple, le segment de fibre 12 étant fixé par ses deux extrémités à des éléments de maintien 13 et 14 destinés à transmettre au segment de fibre 12 une tension mécanique longitudinal induite par un actionneur piézoélectrique, la tension mécanique appliquée au segment de fibre étant fonction de la distance d séparant les deux éléments 13 et 14.

Dans l'exemple illustré par la figure 1, l'actionneur piézoélectrique est constitué de barreaux 15 en matériau piézoélectrique monocristallin, disposés longitudinalement, autrement dit selon une direction parallèle à l'axe du segment de fibre optique, entre les deux éléments de maintien 13 et 14, dimensionnés et agencés de façon à maintenir les deux éléments de maintien 13 et 14 écartés l'un de l'autre d'une distance d dont la valeur est fonction de la tension électrique qui est appliquée à ces barreaux.

Les barreaux 15 sont par ailleurs dimensionnés de telle façon que lorsqu'aucune tension électrique ne leur est appliquée, ils maintiennent les deux éléments de maintien 13 et 14 écartés l'un de l'autre d'une distance $d_0$ telle que le segment de fibre optique constituant le laser subit une pré-tension mécanique de valeur donnée. Pour cette valeur d'écart $d_0$, la pré-tension imposée au segment de fibre optique 12 induit par exemple la production d'une onde laser de longueur d'onde $\lambda_0$.

D'un point de vue structurel, les barreaux 15 de matériau piézoélectrique peuvent être agencés de différentes façons, pour autant que l'agencement considéré permette de contrôler la tension mécanique appliquée au segment de fibre optique 12 en faisant varier la tension électrique appliquée aux barreaux.

Dans l'exemple de la figure 1 le transducteur électro-optique considéré comporte deux groupes de deux barreaux et un élément intermédiaire 16 en forme de disque séparant les deux groupes, l'ensemble étant agencé de telle façon que :

- pour chaque groupe les deux barreaux sont disposés, de manière préférentielle, symétriquement par rapport à l'axe du segment de fibre 12,
- les deux barreaux constituant un groupe sont placés respectivement dans le prolongement d'un des barreaux constituant l'autre groupe,
- chacun des barreaux 15 constituant un groupe donné présente une extrémité mécaniquement solidaire d'un des éléments de maintien 13 ou 14, l'autre extrémité prenant appui sur une des faces de l'élément intermédiaire 16 dont elle est solidaire. De la sorte, deux barreaux 15 situés dans le prolongement l'un de l'autre prennent appui sur chacune des faces de l'élément intermédiaire 16 et sont séparés l'un de l'autre par ce dernier.

L'élément intermédiaire 16 présente par ailleurs en son centre une ouverture 17 permettant au segment de fibre optique 12 de le traverser librement.

Comme l'illustre la figure 1, l'écartement d entre les deux éléments de maintien 13 et 14 est contrôlé par le dispositif constitué par les deux groupes de barreaux 15 et l'élément intermédiaire 16. Au repos, lorsqu'aucune tension électrique n'est appliquée aux barreaux, l'écart d est sensiblement égal à la somme des longueurs de chaque groupe de barreaux 15 et de l'épaisseur $\Delta L$ de l'élément intermédiaire 16.

D'un point de vue fonctionnel le transducteur électro-optique 11, illustré par la figure 1, se comporte de façon telle qu'une tension électrique appliquée sur les barreaux 15 constituant l'actionneur piézoélectrique entraine une modification de la longueur de ces derniers qui modifie la valeur d de l'écartement entre les éléments de maintien 13 et 14. La modification de cet écartement entraine une variation de longueur du segment de fibre optique 12 et par suite une variation de la tension mécanique appliquée à ce segment 12.

Cette variation de la tension mécanique appliquée au segment de fibre optique 12 se traduit finalement par une variation de la longueur d'onde À émise par la source laser.

En pratique une augmentation de la tension mécanique induit un accroissement de la valeur de la longueur d'onde $\lambda$ émise par le laser, et inversement.

Ainsi, en faisant varier la tension électrique appliquée à l'actionneur il est possible de faire varier la longueur d'onde $\lambda$ de la source laser en plus ou en moins autour d'une valeur nominale $\lambda_0$, qui correspond à la tension mécanique appliquée au segment de fibre 12 lorsqu'aucune tension électrique n'est appliquée sur les barreaux 15 de l'actionneur (pré-tension).

La pré-tension imposée à la fibre permet ainsi avantageusement de moduler la valeur de la longueur d'onde émise $\lambda$ autour de la valeur $\lambda_0$ en appliquant sur les barreaux 15 de l'actionneur piézoélectrique une tension électrique positive ou négative.

Cependant, dans le cas d'un transducteur du type de celui schématisé par la figure 1, la variation de la longueur d'onde $\lambda$ de l'onde émise par le laser à fibre dépend non seulement de la variation de longueur du segment de fibre 12, mais aussi de la variation de l'indice optique $\eta$ de la fibre employée. Or, de telles variations sont naturellement induites par des variations de la température.

Dans le cas d'un transducteur tel que celui illustré par la figure 1, une variation de la température ambiante $\theta$ se traduit ainsi par une variation de la longueur d'onde $\lambda$ émise par le transducteur, variation qui peut être exprimée par la relation suivante :

$$\frac{d\lambda}{d\theta} = k_1 \frac{d\eta}{d\theta} + k_2 \frac{dl}{d\theta} \qquad\qquad [001]$$

où $k_1$ et $k_2$ représentent deux coefficients de proportionnalité de valeurs données, fonctions de la nature de la fibre considérée.

Cette variation au cours du temps de la valeur de $\lambda_0$ a pour conséquence d'élargir inutilement la bande passante lumineuse pouvant être occupée par l'onde modulée générée par le transducteur 11.

Par suite, pour disposer d'un transducteur électro-optique capable de fonctionner avec une bande passante lumineuse optimisée, il est indispensable de disposer d'un moyen permettant de compenser les variations de la longueur d'onde nominale $\lambda_0$ dues aux variations de température ambiante $\theta$, moyen dont le transducteur illustré par la figure 1, connu de l'art antérieur, est dépourvu en l'état.

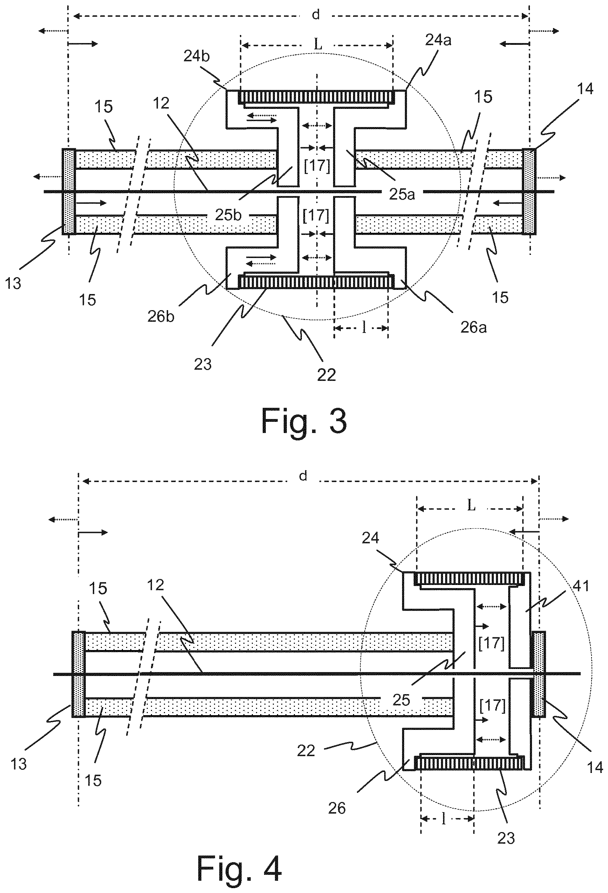

Les figures 2 et 3 présentent une représentation simplifiée en coupe longitudinale d'un transducteur électro-optique 21, du type illustré par la figure 1, intégrant le dispositif 22 de compensation en température selon l'invention. Cette vue simplifiée ne laisse apparaitre que les éléments du transducteur impliqués directement dans la fonction de génération d'une onde lumineuse modulée. Les moyens pour appliquer une tension électrique de commande à l'actionneur piézoélectrique ne sont en particulier pas représentés.

Considérant la relation [001], on constate que pour réaliser une compensation des variations de la longueur d'onde $\lambda_0$ dues aux variations de température ambiante $\theta$, il faut réaliser la condition exprimée par la relation suivante:

$$\frac{dl}{d\theta} = -k \, \frac{d\eta}{d\theta} \qquad\qquad\qquad [002]$$

Or pour une fibre optique donnée la variation de la température ambiante $\theta$ induit une variation de même signe de l'indice optique $\eta$ de la fibre qui induit elle-même une variation de même signe de la valeur de la longueur d'onde.

De la même façon la variation de la température ambiante $\theta$ induit une variation de même signe de la longueur de la fibre qui induit elle-même une variation de même signe de la valeur de la longueur d'onde.

Par suite, pour respecter la condition de la relation [002], la solution mise en œuvre par l'invention consiste à utiliser un moyen additionnel permettant d'induire une variation de longueur du segment de fibre 12 de sens opposé à la variation d'indice induite par la variation de la température ambiante $\theta$, et d'amplitude suffisante pour induire une variation de longueur d'onde égale en module, au coefficient de proportionnalité k près, à la variation de l'indice optique.

Le moyen utilisé est par ailleurs agencé au niveau du transducteur de telle façon que la valeur de la distance d séparant l'un de l'autre les éléments de maintien 13 et 14 du segment de fibre optique 12 constituant la source laser, autrement dit la longueur du segment de fibre 12, soit fonction d'une dimension du moyen, de son épaisseur par exemple. Autrement dit, le moyen additionnel utilisé est agencé de façon à intervenir dans la valeur de l'écart d.

Dans le cadre de l'invention, le moyen additionnel consiste en un dispositif 22 de compensation en température formé d'un assemblage d'éléments emboités présentant des coefficients de dilatation thermique sensiblement différents:

- un premier élément support 23, en matériau à faible coefficient de dilatation thermique, du verre, du quartz ou du Zerodur par exemple, et

- au moins un second élément 24, ou élément terminal, en matériau présentant un coefficient de dilatation thermique plus élevé, un polymère par exemple.

Dans l'exemple de mise en œuvre illustré par les figures 2 et 3, le dispositif 22 est placé en position centrale en lieu et place de l'élément intermédiaire 16 de la figure 1 et comporte un support 23 et deux éléments terminaux 24a et 24b placés aux deux extrémités du support 23.

D'un point de vue morphologique et dimensionnel, le support 23 du dispositif 22 présente, comme l'illustre la vue en coupe de la figure 3, la forme d'un tube de longueur L ouvert à ses extrémités, de préférence de la forme d'un cylindre de révolution, présentant un axe de révolution sensiblement confondu avec l'axe du segment de fibre optique 12, dont la paroi latérale définit une ouverture axiale interne.

chaque élément terminal 24a ou 24b est quant à lui configuré pour former un bouchon destiné à obturer partiellement une extrémité du support 23 du dispositif.

Chaque élément terminal 24a ou 24b présente par ailleurs la forme d'un tube, de longueur 1 inférieure à la moitié de la longueur L du support 23. Ce tube est obturé partiellement à une de ses extrémités par une paroi d'extrémité, 25a ou 25b, ou paroi de fond, présentant une ouverture circulaire centrale permettant au segment de fibre optique 12 de la source laser de traverser librement le dispositif 22, lorsque ce dernier est mis en place, tandis que l'autre extrémité est ouverte.

Les dimensions internes d'un élément terminal 24 (24a ou 24b) sont définies de telle façon que les extrémités des barreaux en matériau piézoélectrique appartenant à un même groupe puissent pénétrer à l'intérieur de l'élément terminal et prendre appui sur la surface d'une paroi de fond 25 dudit élément. A cet effet un élément terminal 24 présente préférentiellement un diamètre interne sensiblement constant.

Les formes et les dimensions respectives du support 23 et des éléments terminaux 24a et 24b sont en outre définies de telle façon que l'élément terminal 24 considéré puisse être inséré par son extrémité fermée à l'intérieur du support 23, et enfoncé à l'intérieur du support jusqu'à ce que le bord limitant son extrémité ouverte coïncide avec le bord de l'ouverture du support 23 par laquelle il est entré.

Par ailleurs, chaque élément terminal 24 est configuré de façon à pouvoir être fixé au support 23 au niveau de son extrémité ouverte.

A cet effet, dans une forme de réalisation particulière illustrée par les figures 2 et 3, l'extrémité ouverte d'un élément terminal 24 (24a ou 24b) comporte un bord circonférentiel 26 (26a ou 26b), ou bord tombé, permettant également d'assurer la fixation de l'extrémité de l'élément terminal au support 23.

Dans cette forme de réalisation, chaque élément terminal 24 est configuré pour être inséré à l'intérieur du support 23 par son extrémité fermée par sa paroi d'extrémité 25, et être enfoncé dans le support en glissant le long de la paroi interne de ce dernier jusqu'à ce que le bord tombé 26 vienne en butée sur le bord délimitant l'ouverture du support 23 par laquelle il a été inséré dans ce dernier.

Une fois assemblé, le dispositif 22 selon l'invention présente donc, dans la forme de mise en œuvre considérée, une partie centrale tubulaire de longueur L qui correspond au support 23, obturé à chacune de ses extrémités par un bouchon de forme également tubulaire de longueur 1, qui correspond à un élément terminal 24a ou 24b, cet élément terminal étant fermé à une de ses extrémités par une paroi de fond 25. Ledit bouchon s'étend sur toute sa longueur 1 à l'intérieur de la partie centrale.

Les parois d'extrémités 25a et 25b des éléments terminaux 24a et 24b définissent alors une cavité intérieure 17 de longueur donnée $\Delta L$ égale à L-21.

Ainsi, du fait de l'intégration du dispositif 22 à la structure du transducteur 21, l'actionneur piézoélectrique se trouve constitué par les barreaux 15 et par le dispositif 22. Chacun des barreaux est relié mécaniquement à un des éléments de maintien 13 et 14 par une de ses extrémités et à la paroi d'obturations d'un des éléments terminaux 24a et 24b dudit dispositif 22 par son autre extrémité. Les longueurs respectives des barreaux 15 placés de part et d'autre dudit dispositif 22 sont sensiblement identiques, de sorte que ce dernier occupe une position sensiblement médiane dans la structure de l'actionneur18.

La longueur de l'actionneur ainsi formé, et par suite la longueur de l'écart d séparant les éléments de maintien 13 et 14, est alors égale à la somme des longueurs des barreaux 15 situés de part et d'autre du dispositif et de la longueur $\Delta L$ de la cavité 17.

D'un point de vue structurel, lorsque le dispositif est assemblé, chacun des éléments terminaux 24 est fixé par son extrémité au support 23, au niveau d'un des bords d'extrémités de ce dernier. On obtient ainsi un assemblage solidaire pour lequel les mouvements relatifs des deux éléments terminaux 24a et 24b vis-à-vis de l'élément support 23 sont limités aux coulissements axial du corps de chaque élément terminal 24 le long de la paroi interne du support 23, comme illustré par la figure 3. Par coulissement axial on entend déplacement relatif de la surface externe du corps de l'élément terminal 24 considéré par rapport à la paroi interne du support dans une direction parallèle à l'axe du segment de fibre.

Cette structure particulière confère au dispositif selon l'invention un comportement en température caractéristique qui est avantageusement mis à profit dans le cadre de l'invention.

En effet, du fait de la géométrie particulière des éléments 23 et 24 qui le constituent, et du fait que le matériau constituant le support 23 présente un coefficient de dilatation thermique sensiblement plus faible que le matériau constituant les éléments terminaux 24, une variation de température ambiante θ provoque une variation de la longueur 1 de chaque élément terminal 24 sensiblement plus importante que la variation de la longueur L du support 23 provoquée par cette même variation.

Ceci entraine un déplacement axial des parois d'extrémités (parois de fond) 25a et 25b des éléments terminaux 24a et 24b, selon l'axe longitudinal du segment de fibre 12.

Ainsi, selon le sens de variation de la température ambiante θ, les parois d'extrémités (parois de fond) 25a et 25b s'enfoncent plus avant à l'intérieur du support 23, de telle sorte que la longueur $\Delta L$ de la cavité intérieure 17 diminue, ou inversement se rapprochent des extrémités de ce dernier de telle sorte que la longueur $\Delta L$ de la cavité intérieure 17 augmente.

Autrement dit, les deux éléments d'extrémités 24a et 24b étant mécaniquement liés l'un à l'autre par le support 23, si l'on considère la distance $\Delta L$ qui sépare les deux parois 25a et 25b on constate que, si la température ambiante θ augmente, les parois 25a et 25b se rapprochent l'une de l'autre, comme l'indiquent les flèches en traits pleins sur la figure 3, de sorte que deux éléments prenant chacun appui sur une des parois se rapprochent.

Inversement, si la température ambiante θ diminue, les parois 25a et 25b s'éloignent l'une de l'autre comme l'indique les flèches en traits pointillés sur la figure 3, de sorte que deux éléments prenant chacun appui sur une des parois s'éloignent également.

Par suite, lorsqu'il est mis en place dans un transducteur tel que celui de la figure 2, le dispositif 22 selon l'invention se comporte avantageusement comme un élément présentant un coefficient de dilatation thermique négatif qui fait varier la longueur de l'actionneur de façon opposée à la variation de température.

De la sorte, les barreaux 15 ayant un coefficient de dilatation thermique faible, l'écart d entre les deux éléments de maintien 13 et 14 varie de sorte que, quand la température ambiante θ augmente, la distance d diminue ce qui a pour effet de diminuer la tension mécanique sur le segment de fibre optique 12. La diminution de la tension mécanique a pour effet, quant à elle, de diminuer la valeur de la longueur d'onde nominale $\lambda_0$ produite par la source laser, cette diminution permettant de compenser l'accroissement induit par la variation de l'indice optique du segment de fibre 12.

Inversement, quand la température ambiante θ diminue, la distance d augmente ce qui a pour effet d'augmenter la tension mécanique sur le segment de fibre optique 12. L'augmentation de la tension mécanique a pour effet de d'augmenter la valeur de la longueur d'onde nominale $\lambda_0$ produite par la source laser, cette augmentation permettant de compenser la diminution induite par la variation de l'indice optique du segment de fibre 12.

La réalisation d'un tel dispositif permet ainsi avantageusement de disposer d'un élément simple et peu coûteux qui présente un comportement en température caractéristique, que seuls des éléments monolithiques réalisés dans des matériaux particuliers et coûteux peuvent normalement présenter.

D'un point de vue dimensionnel, les longueurs respectives L et 1 de l'élément support 23 et des éléments terminaux 24a et 24b sont définies de façon à obtenir une variation de la longueur ΔL de la cavité intérieure 17 permettant de réaliser la compensation en température désirée.

Ainsi dans le cas d'un transducteur électro-optique tel que celui illustré par la figure 2, les longueurs L et 1 sont déterminées de telle façon que, compte tenu des coefficients de dilatation respectifs des matériaux constituant ces éléments, la longueur ΔL de la cavité intérieure 17 ne soit jamais nulle, quelle que soit la valeur de la température ambiante θ.

L et 1 sont par ailleurs définies de telle façon que la variation de la longueur ΔL de la cavité intérieure 17 en fonction de la température ambiante θ soit sensiblement égale en module à la variation de longueur à imposer au segment de fibre optique 12 constituant la source laser du transducteur 21 pour faire varier la tensions mécanique appliquée à la fibre de façon à annuler les effets des variations d'indice optique de la fibre, induites par les variations de température, sur la valeur nominale $\lambda_0$ de la longueur d'onde émise.

Ainsi, si l'on considère un transducteur électro-optique tel que celui illustré schématiquement par les figures 2 et 3, la longueur $l_f$ du segment de fibre optique 12 compris entre les deux éléments de maintien 13 et 14 peut être définie, en négligeant les épaisseurs des éléments 25a et 25b, par la relation suivante :

$$l_f = 2(l_s - l_c + l_b) \qquad\qquad [003]$$

où $l_b$ représente la longueur d'un barreau 15
et où $l_s$ = L/2 correspond à la demi-longueur du support 23 et $l_c$ = 1, à la longueur de la partie tubulaire d'un élément terminal 24.

Par suite, dans ce cas, les caractéristiques fonctionnelles définissant le dispositif selon l'invention, peuvent être traduites en termes dimensionnels par la relation suivante :

$$\frac{\Delta l_f}{l_f} = \frac{l_s\alpha_s - l_c\alpha_c + l_b\alpha_b}{l_f} = -k\cdot\eta_f \qquad\qquad [004]$$

où $\eta_f$ représente l'indice optique du segment de fibre optique 12 et où $\alpha_s$, $\alpha_c$ et $\alpha_b$ représentent respectivement les coefficients de dilatation thermique du matériau du support 23, du matériau des éléments terminaux 24 et du matériau piézoélectrique constituant les barreaux 15.

k représente quant à lui un simple coefficient de proportionnalité. A titre d'exemple on peut noter que dans le cas d'un segment de fibre optique constitué d'une fibre à cœur de verre, la valeur de k est telle que le produit $k\cdot\eta_f$ vaut sensiblement 9,36 $10^{-6}$.

De manière pratique, les différentes caractéristiques dimensionnelles définissant le dispositif de compensation selon l'invention, les valeurs de L et 1 en particulier, peuvent être calculées de manière analytique, connaissant les caractéristiques dimensionnelles du transducteurs dans lequel il est mis en place, à partir des coefficients de dilatation thermique des matériaux utilisés pour réaliser le support 23 et les éléments d'extrémités 24 et de la loi de variation de l'indice de la fibre optique constituant le segment 12.

Il est également possible de réaliser des pièces de géométrie plus complexe en déterminant les déformations thermiques subies par les pièces 23 et 24 par calcul par éléments finis de façon à dimensionner ces pièces.

A partir de l'exemple de mise en œuvre décrit dans les paragraphes précédents et illustré par les figures 2 et 3, Le dispositif de compensation 22 selon l'invention peut ainsi être défini comme un élément venant avantageusement s'intégrer à la structure de l'actionneur piézoélectrique du transducteur 21 considéré.

De par sa structure particulière, le dispositif de compensation selon l'invention permet avantageusement d'introduire dans la structure de l'actionneur piézoélectrique un élément présentant un coefficient de dilatation thermique négatif nécessaire pour faire varier la longueur de l'actionneur de façon à compenser les variations de longueur d'onde induite par les variations de température ambiante θ.

Dans le cas de l'exemple de mise en œuvre décrit précédemment, le transducteur considéré présente une symétrie axiale (i.e. une symétrie par rapport d'un plan de coupe transversale passant par le centre du segment de fibre 12) recherchée pour des raisons fonctionnelles particulières non détaillées ici.

Par suite le dispositif selon l'invention vient prendre naturellement la place de l'élément central d'origine 16 illustré sur la figure 1 et est structuré de façon à maintenir la symétrie axiale recherchée. A cet effet il présente alors une structure symétrique, avec un support central tubulaire 23 et deux éléments terminaux identiques 24a et 24b, et est placé en position médiane à l'intérieur du transducteur.

Cependant, il apparaitra clairement que l'effet technique recherché lorsqu'on met en œuvre le dispositif selon l'invention est avant tout de disposer d'un élément présentant un coefficient de dilatation thermique à valeur négative.

La figure 4 illustre une variante de mise en œuvre du dispositif selon l'invention dans le cadre d'un transducteur électro-optique 31 fonctionnant sur le même principe que le transducteur 11 considéré précédemment, mais ne présentant pas le caractère de symétrie axiale.

Le transducteur considéré ici présente une structure simplifiée, sans élément intercalaire, dans laquelle l'actionneur piézoélectrique comporte des barreaux 15 s'étendant sans interruption entre les deux éléments de maintien 13 et 14. Dans un tel contexte la mise en place du dispositif 22 selon l'invention peut être effectuée, comme l'illustre la figure 4, au niveau d'une des extrémités de l'actionneur en plaçant le dispositif selon l'invention 22 au contact d'un des éléments de maintien 13 ou 14.

Le dispositif selon l'invention 22 présente alors une forme simplifiée comportant par exemple un élément support 23 fermé à une de ses extrémités par un élément terminal formé par une paroi fixe 41 et un élément terminal 24 semblable aux éléments 24a et 24b décrits précédemment. La paroi fixe 41 et la paroi d'extrémité 25 de l'élément terminal 24 forment à elles deux une cavité 17 dont la largeur varie en fonction de la témperature ambiante θ de façon analogue à la façon dont varie la longueur de la cavité définie par les parois de fonds 25a et 25b décrite précédemment. On obtient ainsi, de manière analogue au cas précédent un dispositif 22 présentant un coefficient de dilatation thermique négatif. Cependant la variation de la longueur de la cavité 17 est ici induite par le seul mouvement axial de la paroi d'extrémité 25 de l'élément terminal 24.

L'actionneur piézoélectrique comporte ici une pluralité de barreaux 15 en matériau piézoélectrique, agencés de façon à ce que tous les barreaux soient reliés mécaniquement à un même élément de maintien 13 par une de leurs extrémités et que chaque barreau soit relié à la paroi d'extrémité 25 de l'élément terminal 24 du dispositif 22 par son autre extrémité.

Le dispositif 22 est relié par sa paroi fixe 41 à l'autre élément de maintien 14, de sorte que ce dernier occupe une position extrême dans la structure de l'actionneur.

Les figures 5 et 6 illustrent respectivement une vue en coupe axiale d'un transducteur électro-optique connue de l'état de l'art, dont la structure et le principe de fonctionnement sont décrits, comme indiqué précédemment dans la demande de brevet français déposée par la demanderesse et publiée sous la référence FR 3045817, et une vue en coupe longitudinale selon l'axe du segment de fibre optique 12, du même transducteur équipé du dispositif de compensation selon l'invention, dans un positionnement central correspondant au premier exemple de mise en œuvre décrit dans la présente description.

Comme on peut le constater en considérant les deux figures, la mise en place du dispositif de compensation en température selon l'invention dans un tel transducteur peut avantageusement être réalisée en conservant la symétrie axiale d'origine. Pour ce faire il convient simplement de mettre en œuvre un dispositif de compensation de structure symétrique comportant notamment deux éléments terminaux 24.

## Revendications

1. Dispositif de compensation (22) des variations en température de la longueur d'une fibre optique (12) d'un transducteur électro-optique (11), comportant un élément support (23) tubulaire dont l'axe de symétrie est confondu avec l'axe de ladite fibre optique (12) et deux éléments terminaux agencés axialement par rapport à l'élément support (23) et formant deux parois obturant l'élément support de façon à délimiter à l'intérieur du support (23) une cavité (17) de longueur ΔL; **caractérisé en ce qu'**au moins un premier élément terminal (24) est configuré pour former une paroi mobile à l'intérieur de l'élément support (23), ledit élément (24) présentant un corps de forme cylindrique, configuré pour pouvoir être inséré à l'intérieur du support tubulaire (23) et pour pouvoir coulisser axialement à l'intérieur de ce dernier; ledit corps cylindrique comportant une paroi d'extrémité (25), le support tubulaire (23) et l'élément terminal (24) étant agencés et fixés l'un à l'autre au niveau du bord d'extrémité de l'élément support (23) de telle façon que le corps de l'élément terminal (24) soit maintenu libre de coulisser à l'intérieur du support (23); le coulissement du corps du premier élément terminal (24) entrainant le déplacement axial de sa paroi d'extrémité (25) à l'intérieur de l'élément support (23) et une variation de la longueur $\Delta L$ de ladite cavité (17); les matériaux constituant respectivement l'élément support (23) et l'élément terminal (24) étant choisis pour leurs coefficients de dilatation thermique respectifs, de telle sorte que le sens de variation de la longueur $\Delta L$ de ladite cavité (17) en fonction de la température ambiante $\theta$ soit de signe opposé au sens de variation de ladite température ambiante.

2. Dispositif de compensation selon la revendication 1, **caractérisé en ce que** ledit premier élément terminal (24) formant une paroi mobile comporte un corps cylindrique dont l'extrémité ouverte présente un bord tombé (26), ledit bord prenant appui sur le bord d'extrémité du support (23) lorsque l'élément terminal (24) est inséré dans le support (23); ledit rebord étant fixé sur le bord d'extrémité de l'élément support.

3. Dispositif de compensation en température selon l'une des revendications 1 ou 2, **caractérisé en ce que** le matériau constituant l'élément support (23) est un matériau présentant un coefficient de dilatation thermique sensiblement inférieur au coefficient de dilatation thermique du matériau constituant le premier élément terminal (24).

4. Dispositif de compensation en température selon l'une quelconque des revendications 1 à 3, **caractérisé en ce que**:

   - le support (23) est réalisé dans un matériau à faible coefficient de dilatation thermique, en particulier du verre, du quartz ou du Zerodur, et
   - le premier élément terminal (24) est réalisé dans un matériau à coefficient de dilatation thermique plus élevé, en particulier en matériau polymère.

5. Dispositif de compensation en température selon l'une quelconque des revendications 1 à 4, **caractérisé en ce qu'**il comporte deux éléments terminaux (24a, 24b) de structures identiques, placés à chacune des extrémités de l'élément support (23) et formant deux parois mobiles, chaque élément terminal étant inséré dans le support (23) par une des extrémités du support; les longueurs des corps des éléments terminaux (24a, 24b) étant déterminés de telle façon que la longueur $\Delta L$ de la cavité (17) délimitée par les parois d'extrémité (25a, 25b) ne soit jamais nulle quelle que soit la valeur de la température ambiante $\theta$.

6. Dispositif de compensation en température selon la revendication 5, **caractérisé en ce que** les faces externes des parois d'extrémités (25a, 25b) des éléments terminaux (24a, 24b) du dispositif sont configurées pour servir d'interfaces avec la structure mécanique pour laquelle le dispositif (22) est destiné à assurer une compensation en température.

7. Dispositif de compensation en température selon l'une quelconque des revendications 1 à 4, **caractérisé en ce qu'**il comporte un premier élément terminal (24) placé à une des extrémités de l'élément support (23) et comportant une paroi d'extrémité (25) formant une paroi mobile obturant une des extrémités de l'élément support (23), ledit élément terminal étant inséré dans le support (23) par une des extrémités du support; ainsi qu'un second élément terminal (41) formant une paroi fixe obturant l'autre extrémité de l'élément support; la paroi d'extrémité (25) du premier élément terminal (24) et la paroi fixe formant le second élément terminal (41) définissant la cavité (17) de longueur $\Delta L$; la longueur 1 du corps du premier élément terminal (24) étant déterminée de telle façon que la longueur $\Delta L$ de la cavité (17) délimitée par la paroi d'extrémité (25) de ce dernier et la cloison fixe (41) ne soit jamais nulle quelle que soit la valeur de la température ambiante $\theta$.

8. Transducteur électro-optique comportant une source laser constituée par un segment de fibre optique (12) fixé à chacune de ses extrémités à un élément de maintien (13, 14); lesdits éléments de maintien étant maintenus écartés l'un de l'autre d'une distance d par un actionneur piézoélectrique (18) placé entre eux et prenant appui sur ces derniers; l'actionneur (18) étant configuré de telle façon que sa longueur varie en fonction de la tension électrique qui lui est appliquée, la variation de longueur induisant une variation sensiblement identique de la distance d séparant les éléments de maintien (13, 14); le transducteur étant **caractérisé en ce que** l'actionneur (18) comporte une pluralité de barreaux (15) en matériau piézoélectrique, agencés longitudinalement autour du segment de fibre optique (12) entre les éléments de maintien (13, 14) ainsi qu'un dispositif de compensation en température (22) selon l'une des revendications 1 à 7, ledit dispositif étant agencé dans le prolongement des barreaux (15) de l'actionneur de façon à ce que la longueur de l'actionneur soit sensiblement égale à la somme de la longueur des barreaux (15) de matériau piézoélectrique et de l'écart $\Delta L$ séparant les parois d'obturation (24a, 24b) du dispositif.

9. Transducteur électro-optique selon la revendication 8, **caractérisé en ce que** la longueur de l'actionneur piézoélectrique est définie de telle façon que lorsque ce dernier n'est excité par aucune tension électrique, la distance d séparant les éléments de maintien (13, 14) induit une pré-tension mécanique sur le segment de fibre (12) ladite pré-tension permettant à l'actionneur (18) de faire varier la longueur du segment de fibre (12), en plus et en moins autour d'une valeur de longueur nominale correspondant pour la source laser à une longueur d'onde émise $\lambda_0$.

10. Transducteur électro-optique selon l'une des revendications 8 ou 9, **caractérisé en ce que** l'actionneur piézoélectrique (18) comporte une pluralité de barreaux (15) en matériau piézoélectrique agencés de part et d'autre du dispositif de compensation en température (22), chacun des barreaux étant relié mécaniquement à un des éléments de maintien (13, 14) par une de ses extrémités et à une des parois d'obturations dudit dispositif (22) par son autre extrémité, les longueurs respectives des barreaux (15) placés de part et d'autre dudit dispositif (22) étant sensiblement identiques, de sorte que ce dernier (22) occupe une position médiane dans la structure de l'actionneur (18).

11. Transducteur électro-optique selon l'une des revendications 8 ou 9, **caractérisé en ce que** l'actionneur piézoélectrique (18) comporte une pluralité de barreaux (15) en matériau piézoélectrique agencés de façon à ce que tous les barreaux soient reliés mécaniquement à un même élément de maintien (13) par une de leurs extrémités et que chaque barreau soit relié à la paroi d'obturation (25) du premier élément terminal (24) du dispositif (22) de compensation en température par son autre extrémité, ledit dispositif (22) étant relié par sa paroi fixe (41) à l'autre élément de maintien (14), de sorte que ce dernier (22) occupe une position extrême dans la structure de l'actionneur (18).

12. Transducteur électro-optique selon l'une des revendications 8 à 11, **caractérisé en ce que** les longueurs respectives L du support (23) et 1 du corps d'un élément d'extrémité (24) constituant le dispositif de compensation en température (22), sont définies de telle façon que compte tenu des coefficients de dilatation en température des matériaux constituant respectivement le support (23) et l'élément d'extrémité (24), la variation de la longueur ΔL de la cavité interne du dispositif de compensation en température (22), induite par la variation de la température ambiante θ, soit égale, en module, à la variation de la longueur du segment de fibre optique (12) nécessaire pour compenser la variation de longueur d'onde longueur émise par la source laser induite par cette variation de température.

**Patentansprüche**

1. Vorrichtung (22) zum Kompensieren von Temperaturschwankungen der Länge einer optischen Faser (12) eines elektrooptischen Wandlers (11), mit einem rohrförmigen Trägerelement (23), dessen Symmetrieachse mit der Achse der optischen Faser (12) zusammenfällt, und zwei Endelementen, die axial in Bezug auf das Trägerelement (23) angeordnet sind und zwei Wände bilden, die das Trägerelement verschließen, um im Inneren des Trägers (23) einen Hohlraum (17) der Länge ΔL zu begrenzen; **dadurch gekennzeichnet, dass** mindestens ein erstes Endelement (24) zum Bilden einer beweglichen Wand im Inneren des Trägerelements (23) konfiguriert ist, wobei das Element (24) einen Körper von zylindrischer Form aufweist, der so konfiguriert ist, dass er in das Innere des rohrförmigen Trägers (23) eingesetzt werden kann und innerhalb des Letzteren axial gleiten kann; wobei der zylindrische Körper eine Endwand (25) aufweist, wobei der rohrförmige Träger (23) und das Endelement (24) am Endrand des Trägerelements (23) angeordnet und aneinander befestigt sind, so dass der Körper des Endelements (24) so gehalten wird, dass er innerhalb des Trägers (23) frei gleiten kann; wobei das Gleiten des Körpers des ersten Endelements (24) die axiale Verschiebung seiner Endwand (25) im Inneren des Trägerelements (23) und eine Variation der Länge ΔL des Hohlraums (17) bewirkt; wobei die das Trägerelement (23) bzw. das Endelement (24) bildenden Materialien für ihre jeweiligen Wärmeausdehnungskoeffizienten gewählt sind, so dass die Richtung der Variation der Länge ΔL des Hohlraums (17) in Abhängigkeit von der Umgebungstemperatur θ ein entgegengesetztes Vorzeichen zur Richtung der Variation der Umgebungstemperatur hat.

2. Kompensationsvorrichtung nach Anspruch 1, **dadurch gekennzeichnet, dass** das eine bewegliche Wand bildende erste Endelement (24) einen zylindrischen Körper umfasst, dessen offenes Ende eine Bördelung (26) aufweist, wobei die Bördelung am Endrand des Trägers (23) anliegt, wenn das Endelement (24) in den Träger (23) eingesetzt ist; wobei der Rand am Endrand des Trägerelements befestigt ist.

3. Temperaturkompensationsvorrichtung nach Anspruch 1 oder 2, **dadurch gekennzeichnet, dass** das das Trägerelement (23) bildende Material ein Material mit einem Wärmeausdehnungskoeffizienten ist, der wesentlich niedriger ist als der Wärmeausdehnungskoeffizient des das erste Endelement (24) bildenden Materials.

4. Temperaturkompensationsvorrichtung nach einem der Ansprüche 1 bis 3, **dadurch gekennzeichnet, dass**:

- der Träger (23) aus einem Material mit einem niedrigen Wärmeausdehnungskoeffizienten, insbesondere aus Glas, Quarz oder Zerodur, gefertigt ist, und
- das erste Endelement (24) aus einem Material mit einem höheren Wärmeausdehnungskoeffizienten, insbesondere aus Polymermaterial, gefertigt ist.

5. Temperaturkompensationsvorrichtung nach einem der Ansprüche 1 bis 4, **dadurch gekennzeichnet, dass** sie zwei Endelemente (24a, 24b) mit identischer Struktur umfasst, die an jedem der Enden des Trägerelements (23) platziert sind und zwei bewegliche Wände bilden, wobei jedes Endelement durch eines der Enden des Trägers in den Träger (23) eingesetzt ist; wobei die Längen der Körper der Endelemente (24a, 24b) so bestimmt werden, dass die Länge $\Delta L$ des von den Endwänden (25a, 25b) begrenzten Hohlraums (17) unabhängig vom Wert der Umgebungstemperatur $\theta$ niemals Null ist.

6. Temperaturkompensationsvorrichtung nach Anspruch 5, **dadurch gekennzeichnet, dass** die Außenflächen der Endwände (25a, 25b) der Endelemente (24a, 24b) der Vorrichtung so konfiguriert sind, dass sie mit der mechanischen Struktur, für die die Vorrichtung (22) zur Temperaturkompensation vorgesehen ist, eine Schnittstelle bilden.

7. Temperaturkompensationsvorrichtung nach einem der Ansprüche 1 bis 4, **dadurch gekennzeichnet, dass** sie ein erstes Endelement (24), das an einem der Enden des Trägerelements (23) platziert ist, und eine Endwand (25) aufweist, die eine bewegliche Wand bildet, die eines der Enden des Trägerelements (23) verschließt, wobei das Endelement durch eines der Enden des Trägers in den Träger (23) eingeführt ist; sowie ein zweites Endelement (41), das eine feste Wand bildet, die das andere Ende des Trägerelements verschließt; wobei die Endwand (25) des ersten Endelements (24) und die das zweite Endelement (41) bildende feste Wand den Hohlraum (17) der Länge $\Delta L$ definieren; wobei die Länge 1 des Körpers des ersten Endelements (24) so festgelegt ist, dass die Länge $\Delta L$ des Hohlraums (17), der durch dessen Endwand (25) und die feste Trennwand (41) begrenzt ist, unabhängig vom Wert der Umgebungstemperatur $\theta$ niemals Null ist.

8. Elektrooptischer Wandler mit einer Laserquelle, die aus einem optischen Fasersegment (12) besteht, das an jedem seiner Enden an einem Halteelement (13, 14) befestigt ist; wobei die Halteelemente durch einen piezoelektrischen Aktuator (18), der zwischen ihnen angeordnet ist und daran anliegt, um einen Abstand d voneinander entfernt gehalten werden; wobei der Aktuator (18) so konfiguriert ist, dass seine Länge in Abhängigkeit von der daran angelegten elektrischen Spannung variiert, wobei die Längenvariation eine im Wesentlichen identische Variation des Abstands d zwischen den Halteelementen (13, 14) bewirkt; wobei der Wandler **dadurch gekennzeichnet ist, dass** der Aktuator (18) eine Mehrzahl von Stäben (15) aus piezoelektrischem Material, die in Längsrichtung um das optische Fasersegment (12) zwischen den Halteelementen (13, 14) angeordnet sind, sowie eine Temperaturkompensationsvorrichtung (22) nach einem der Ansprüche 1 bis 7 umfasst, wobei die Vorrichtung in der Verlängerung der Stäbe (15) des Aktuators so angeordnet ist, dass die Länge des Aktuators im Wesentlichen gleich der Summe aus der Länge der Stäbe (15) aus piezoelektrischem Material und dem Spalt $\Delta L$ zwischen den Verschlusswänden (24a, 24b) der Vorrichtung ist.

9. Elektrooptischer Wandler nach Anspruch 8, **dadurch gekennzeichnet, dass** die Länge des piezoelektrischen Aktuators so definiert ist, dass, wenn dieser nicht durch eine elektrische Spannung angeregt ist, der Abstand d zwischen den Halteelementen (13, 14) eine mechanische Vorspannung auf das Fasersegment (12) induziert, wobei die Vorspannung es zulässt, dass der Aktuator (18) die Länge des Fasersegments (12) positiv oder negativ um einen Nennlängenwert variiert, der für die Laserquelle einer emittierten Wellenlänge $\lambda_0$ entspricht.

10. Elektrooptischer Wandler nach Anspruch 8 oder 9, **dadurch gekennzeichnet, dass** der piezoelektrische Aktuator (18) eine Mehrzahl von auf beiden Seiten der Temperaturkompensationsvorrichtung (22) angeordneten Stäben (15) aus piezoelektrischem Material umfasst, wobei jeder der Stäbe an einem seiner Enden mechanisch mit einem der Halteelemente (13, 14) und an seinem anderen Ende mit einer der Verschlusswände der Vorrichtung (22) verbunden ist, wobei die jeweiligen Längen der auf beiden Seiten der Vorrichtung (22) platzierten Stäbe (15) im Wesentlichen identisch sind, so dass Letztere (22) eine mittlere Position in der Aktuatorstruktur (18) einnimmt.

11. Elektrooptischer Wandler nach Anspruch 8 oder 9, **dadurch gekennzeichnet, dass** der piezoelektrische Aktuator (18) eine Mehrzahl von Stäben (15) aus piezoelektrischem Material umfasst, die so angeordnet sind, dass alle Stäbe an einem ihrer Enden mechanisch mit demselben Halteelement (13) verbunden sind und jeder Stab an seinem anderen Ende mit der Verschlusswand (25) des ersten Endelements (24) der Temperaturkompensationsvorrichtung (22) verbunden ist, wobei die Vorrichtung (22) durch ihre feste Wand (41) mit dem anderen Halteelement (14) verbunden ist, so dass Letztere (22) eine Endposition in der Struktur des Aktuators (18) einnimmt.

**12.** Elektrooptischer Wandler nach einem der Ansprüche 8 bis 11, **dadurch gekennzeichnet, dass** die jeweiligen Längen L des Trägers (23) und 1 des Körpers eines die Temperaturkompensationsvorrichtung (22) bildenden Anschlußelements (24) so definiert sind, dass unter Berücksichtigung der Temperaturausdehnungskoeffizienten der den Träger (23) bzw. das Anschlußelement (24) bildenden Materialien die durch die Änderung der Umgebungstemperatur 0 induzierte Variation der Länge ΔL des inneren Hohlraums der Temperaturkompensationsvorrichtung (22) im Modul gleich der Variation der Länge des optischen Fasersegments (12) ist, die notwendig ist, um die durch diese Temperaturänderung induzierte Variation der von der Laserquelle emittierten Wellenlänge zu kompensieren.

**Claims**

**1.** A device for compensating (22) for variations in temperature of the length of an optical fiber (12) of an electro-optical transducer (11), having a tubular holding element (23) the axis of symmetry of which is coincident with the axis of said optical fiber (12) and two terminal elements arranged axially with respect to the holding element (23) and forming two walls that plug the holding element so as to delineate, inside the holder (23), a cavity (17) of length ΔL; **characterized in that** at least a first terminal element (24) is configured to form a movable wall inside the holding element (23), said element (24) having a body of cylindrical shape configured to be able to be inserted inside the tubular holder (23) and to be able to slide axially inside the latter; said cylindrical body comprising an end wall (25), the tubular holder (23) and the terminal element (24) being arranged and fastened to each other at the end edge of the holding element (23) in such a way that the body of the terminal element (24) is kept free to slide inside the holder (23); the sliding motion of the body of the first terminal element (24) causing the axial movement of its end wall (25) inside the holding element (23) and a variation in the length ΔL of said cavity (17); the materials from which the holding element (23) and the terminal element (24) are respectively made being chosen for their respective coefficients of thermal expansion, such that the direction of variation of the length ΔL of said cavity (17) as a function of the ambient temperature θ is of opposite sign to the direction of variation of said ambient temperature.

**2.** The compensating device according to claim 1, **characterized in that** said first terminal element (24) forming a movable wall comprises a cylindrical body the open end of which has a flanged edge (26), said edge abutting against the end edge of the holder (23) when the terminal element (24) is inserted in the holder (23); said rim being fastened to the end edge of the holding element.

**3.** The temperature compensating device according to one of claims 1 or 2, **characterized in that** the material from which the holding element (23) is made is a material having a coefficient of thermal expansion substantially lower than the coefficient of thermal expansion of the material from which the first terminal element (24) is made.

**4.** The temperature compensating device according to any one of claims 1 to 3, **characterized in that**:

- the holder (23) is made from a material of low coefficient of thermal expansion, in particular from glass, quartz or Zerodur, and
- the first terminal element (24) is made from a material of higher coefficient of thermal expansion, and in particular from a polymer material.

**5.** The temperature compensating device according to any one of claims 1 to 4, **characterized in that** it comprises two terminal elements (24a, 24b) of identical structures, placed at each of the ends of the holding element (23) and forming two movable walls, each terminal element being inserted into the holder (23) via one of the ends of the holder; the lengths of the bodies of the terminal elements (24a, 24b) being defined in such a way that the length ΔL of the cavity (17) delienated by the end walls (25a, 25b) is never zero whatever the value of the ambient temperature θ.

**6.** The temperature compensating device according to claim 5, **characterized in that** the external faces of the end walls (25a, 25b) of the terminal elements (24a, 24b) of the device are configured to serve as interfaces with the mechanical structure for which the device (22) is intended to ensure a compensation for temperature.

**7.** The temperature compensating device according to any one of claims 1 to 4, **characterized in that** it has a first terminal element (24), placed at one of the ends of the holding element (23), and an end wall (25), forming a movable wall that plugs one of the ends of the holding element (23), said terminal element being inserted into the holder (23) via one of the ends of the holder; and a second terminal element (41) forming a fixed wall that plugs the other end of the holding element; the end wall (25) of the first terminal element (24) and the fixed wall forming the second terminal element (41) defining the cavity (17) of length ΔL; the length 1 of the body of the first terminal element (24) being defined in such a way that the length ΔL of the cavity (17) delienated by the end wall (25) of the latter and the fixed wall (41) is never zero whatever the value of the ambient temperature θ.

8. An electro-optical transducer having a laser source consisting of a segment of optical fiber (12) fastened at each of its ends to a securing element (13, 14); said securing elements being kept separated from one another by a distance d by a piezoelectric actuator (18) that is placed therebetween and that abuts against them; the actuator (18) being configured in such a way that its length varies as a function of the electrical voltage that is applied thereto, the variation in length inducing a substantially identical variation in the distance d separating the securing elements (13, 14); the transducer being **characterized in that** the actuator (18) comprises a plurality of bars (15) made of piezoelectric material that are arranged longitudinally about the segment of optical fiber (12) between the securing elements (13, 14) as well as a temperature compensating device (22) according to one of claims 1 to 7, said device being arranged in the extension of the bars (15) of the actuator so that the length of the actuator is substantially equal to the sum of the length of the bars (15) of piezoelectric material and of the distance ΔL separating the plugging walls (24a, 24b) of the device.

9. The electro-optical transducer according to claim 8, **characterized in that** the length of the piezoelectric actuator is defined in such a way that when the latter is excited by no electrical voltage, the distance d separating the securing elements (13, 14) induces a mechanical pre-tension on the segment of fiber (12), said pre-tension allowing the actuator (18) to make the length of the segment of fiber (12) vary positively or negatively about a nominal length value corresponding, for the laser source, to an emitted wavelength $\lambda_0$.

10. The electro-optical transducer according to one of claims 8 or 9, **characterized in that** it the piezoelectric actuator (18) comprises a plurality of bars (15) made of piezoelectric material arranged on either side of the temperature compensating device (22), each of the bars being mechanically connected to one of the securing elements (13, 14) via one of its ends and to one of the plugging walls of said device (22) via its other end, the respective lengths of the bars (15) placed on either side of said device (22) being substantially identical, so that the latter (22) occupies a median position in the structure of the actuator (18).

11. The electro-optical transducer according to one of claims 8 or 9, **characterized in that** the piezoelectric actuator (18) comprises a plurality of bars (15) made of piezoelectric material arranged so that all the bars are mechanically connected to one and the same securing element (13) via one of their ends and so that each bar is connected to the plugging wall (25) of the first terminal element (24) of the temperature compensating device (22) via its other ends, said device (22) being connected via its fixed wall (41) to the other securing element (14), so that said device (22) occupies an end position in the structure of the actuator (18).

12. The electro-optical transducer according to one of claims 8 to 11, **characterized in that** the respective lengths L of the holder (23) and 1 of the body of an end element (24) forming the temperature compensating device (22) are defined in such a way that, given the coefficients of thermal expansion of the materials from which the holder (23) and the end element (24) are respectively made, the variation in the length ΔL of the internal cavity of the temperature compensating device (22), induced by the variation in the ambient temperature θ, is equal, in modulus, to the variation in the length of the segment of optical fiber (12) required to compensate for the variation in the wavelength emitted by the laser source induced by this variation in temperature.

# Fig. 1

# Fig. 2

Fig. 3

Fig. 4

Fig. 5

Fig. 6

**EP 3 658 869 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045817
- WO 2017102767 A1